# FASCICULE DE BREVET EUROPEEN

(11) **EP 4 249 871 B1**
(45) Date de publication et mention de la délivrance du brevet: **30.07.2025**
(21) Numéro de dépôt: 23163898.2
(22) Date de dépôt: 24.03.2023
(51) Int. Cl.: G01K 1/14, G01K 13/00, G01K 7/16

(54) **CAPTEUR DE TEMPERATURE PAR PENETRATION A COUPELLE ISOLANTE**
DURCHDRINGENDER TEMPERATURSENSOR MIT ISOLIERENDEM BECHER
PENETRATION TEMPERATURE SENSOR WITH INSULATING CUP

(30) Priorité: 24.03.2022 FR 2202648
(43) Date de publication de la demande: 27.09.2023
(73) Titulaire: INSTITUT NATIONAL DE RECHERCHE POUR L'AGRICULTURE, L'ALIMENTATION ET L'ENVIRONNEMENT, 75007 Paris (FR)
(72) Inventeur: GAHARTIAN, Jérôme, 85300 CHALLANS (FR); DERENS-BERTHEAU, Evelyne, 91600 SAVIGNY-SUR-ORGE (FR); DURET, Steven, 92340 BOURG-LA-REINE (FR)
(74) Mandataire: Ipsilon

(56) Documents cités:
- CH-A2- 709 520
- DE-A1- 102013 214 845
- FR-A1- 3 003 945

## Description

La présente invention concerne le domaine de la mesure de température, en particulier en ambiance froide.

La présente invention concerne tout particulièrement un capteur de température par pénétration.

Mesurer la température d'une surface ou d'un corps avec une précision de l'ordre du degré peut s'avérer difficile dans une ambiance froide, comme dans une chambre froide. La température peut souvent être inférieure à 10°C. Cette ambiance froide a en effet tendance à entraîner des erreurs de mesure de plusieurs degrés selon le type d'élément de mesure utilisé. Les mesures de température en ambiance froide peuvent donc être peu fiables, notamment lors de l'utilisation de thermocouples associés à un lecteur portatif.

Cette fiabilité est primordiale pour certaines applications comme par exemple le contrôle de température de denrées alimentaires, comme par exemple la viande. Les conséquences d'une mesure erronée peuvent être d'ordre réglementaire, sanitaire et économique en raison des refus de marchandises pouvant avoir lieu en cas de dépassement d'un seuil de température défini.

Une élévation de température de quelques degrés entraîne un développement microbien important et des risques sanitaires plus importants pour les consommateurs. Une mesure fiable est donc nécessaire pour la maîtrise de la qualité des denrées.

De plus, une erreur de mesure liée à l'utilisation d'un capteur de température inadapté peut entraîner le rejet de tout un chargement de denrées par le client. En effet, si la température lue à la réception des produits réfrigérés est trop élevée de 2 ou 3 °C, le rejet des denrées peut être décidé.

Il existe différentes technologies de mesure de température, notamment sans ou avec contact avec la surface ou le corps à mesurer.

La mesure sans contact comprend notamment les thermomètres à infrarouge qui utilisent le rayonnement thermique infrarouge émis par le corps à mesurer. Il a été observé que les thermomètres infrarouges présentaient une erreur de mesure en ambiance froide entre 2 et 4°C. Ces erreurs de mesure sont issues principalement des rayonnements thermiques et des échanges convectifs provenant de l'air circulant aux abords de la surface de mesure. Ainsi, ces thermomètres à infrarouges ne sont pas adaptés à une utilisation en ambiance froide, en particulier sur des denrées réfrigérées. Un autre défaut de ce type de dispositifs de mesure est que la superficie de la portion de surface dont le rayonnement est mesuré dépend de la distance entre le thermomètre et la surface. Sachant que la température mesurée correspond à la température de cette portion de surface, la température mesurée peut sensiblement varier si le corps mesuré est hétérogène, comme une carcasse d'animal regroupant du muscle, de la graisse et de l'aponévrose.

La mesure avec contact comprend notamment les thermomètres à contact. Ce type de thermomètre comprend un capteur muni de lamelles souples apposées au contact de la surface à mesurer. Il est nécessaire de pouvoir maintenir le capteur contre la surface à mesurer avec une certaine pression tout au long de la mesure. Le maintien de la position du thermomètre et de la pression contre la surface peut s'avérer difficile et variable dans le temps entrainant des variations de mesure. L'inclinaison du thermomètre a également tendance à faire varier la mesure. Sur des surfaces de nature différentes, comme une carcasse d'animal, des valeurs de température différentes peuvent être également obtenues du fait de la variation de résistivité entre les différentes composantes de la surface. Ainsi, il a été observé que les thermomètres à contact présentaient une erreur de mesure en ambiance froide pouvant aller au-delà de 2°C.

Il faut également noter que les thermomètres infrarouges et les thermomètres à contact ne permettent uniquement qu'une prise de mesure en surface d'un corps, non en profondeur. Or, certaines applications requièrent une prise de température à une profondeur prédéfinie du corps. C'est notamment le cas de la prise de température des carcasses animales pour lesquelles une mesure de température doit être réalisée à une profondeur effective de 0,5cm.

La mesure avec contact comprend également les thermomètres à pénétration comprenant un aiguillon à insérer à l'intérieur du corps à mesurer, comme il est divulgué par exemple dans le document FR 3 003 945 A1. Toutefois, les thermomètres à pénétration existants ne permettent pas une prise de température de surface précise et fiable. Il n'y a en effet aucune possibilité de savoir à quelle profondeur l'aiguillon est enfoncé ce qui entraîne une variation des mesures.

Il existe donc un besoin pour un dispositif de mesure de température ne présentant pas les inconvénients précités lors d'une prise de température en ambiance froide.

Plus particulièrement, il existe un besoin pour un dispositif de mesure permettant une prise de température précise et fiable, tout en autorisant la prise de température à une profondeur prédéfinie du corps à mesurer.

Pour cela, l'invention propose un capteur de température par pénétration comprenant un boîtier formant une surface de butée annulaire destinée à être disposée au contact d'un corps à mesurer, ladite surface de butée définissant un plan de butée, ledit capteur comprenant également un aiguillon de mesure destiné à pénétrer le corps à mesurer, ledit aiguillon étant fixé au boîtier de sorte qu'une portion de pénétration de l'aiguillon s'étend hors du boîtier, perpendiculairement au plan de butée, la surface de butée s'étendant autour de l'aiguillon, le boîtier formant une cavité d'isolation ouverte s'étendant autour et le long de l'aiguillon d e mesure, une extrémité ouverte de la cavité d'isolation étant délimitée par la surface de butée.

L'agencement de l'aiguillon et du boîtier permet d'isoler thermiquement et électriquement l'organe de mesure disposé à l'intérieur de l'aiguillon ce qui permet de diminuer les variations de température dues, d'une part, à l'écart de température entre l'air ambiant et la surface de mesure et, d'autre part, aux rayonnements thermiques extérieurs qui viennent frapper la surface de mesure et le capteur de température.

De plus, la surface de butée permet de former un appui sur la surface à mesurer de manière à maintenir et stabiliser le capteur de température sur cette surface lors de la prise de mesure.

Selon un mode de réalisation du capteur de température, la surface de butée est délimitée par un bord intérieur et un bord extérieur de telle sorte que la distance séparant les bords intérieur et extérieur est supérieure ou égale à 5mm et inférieure ou égale 15mm.

Selon un mode de réalisation du capteur de température, la longueur de la portion de pénétration est supérieure ou égale à 5mm et inférieure ou égale à 12mm, la longueur de la portion de l'aiguillon étant définie comme la distance entre une extrémité libre de l'aiguillon de mesure et l'intersection entre le plan de butée et l'aiguillon de mesure.

Selon un mode de réalisation du capteur de température, le boîtier est réalisé dans un matériau isolant électrique et thermique.

Selon un mode de réalisation du capteur de température, le boîtier forme une portion annulaire de préhension disposée à l'opposé du boîtier par rapport à l'aiguillon de mesure, la portion annulaire définissant un centre annulaire placé sur l'axe d'extension longitudinale de l'aiguillon de mesure.

Selon un mode de réalisation du capteur de température, la portion annulaire de préhension forme une surface d'appui s'étendant perpendiculairement à l'axe d'extension longitudinale de l'aiguillon de mesure.

Selon un mode de réalisation du capteur de température, celui-ci comprend en outre un élément résistif de mesure de température disposé dans l'aiguillon de mesure.

### Brève description des dessins

Les dessins annexés illustrent l'invention :
[Fig. 1] représente schématiquement une vue en perspective d'un capteur de température par pénétration comprenant notamment un aiguillon de mesure.
[Fig. 2] représente schématiquement une vue en coupe du capteur de température de la figure 1 en position de mesure d'une température d'un corps, l'aiguillon du capteur de température étant inséré à l'intérieur du corps.
[Fig. 3] représente schématiquement une vue en perspective du capteur de température de la figure 1 lors de sa prise en main par un utilisateur pour réaliser une mesure selon la figure 2.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. De plus, le terme « comprenant » n'exclut pas d'autres éléments ou étapes.

La présente invention est illustrée à l'aide des figures qui montrent un exemple de capteur de température par pénétration selon l'invention. On entend par « pénétration » le fait qu'une portion du capteur de température est configurée pour perforer et pénétrer un corps à mesurer pour réaliser une prise de mesure. Cette pénétration est réalisée au moyen d'un aiguillon.

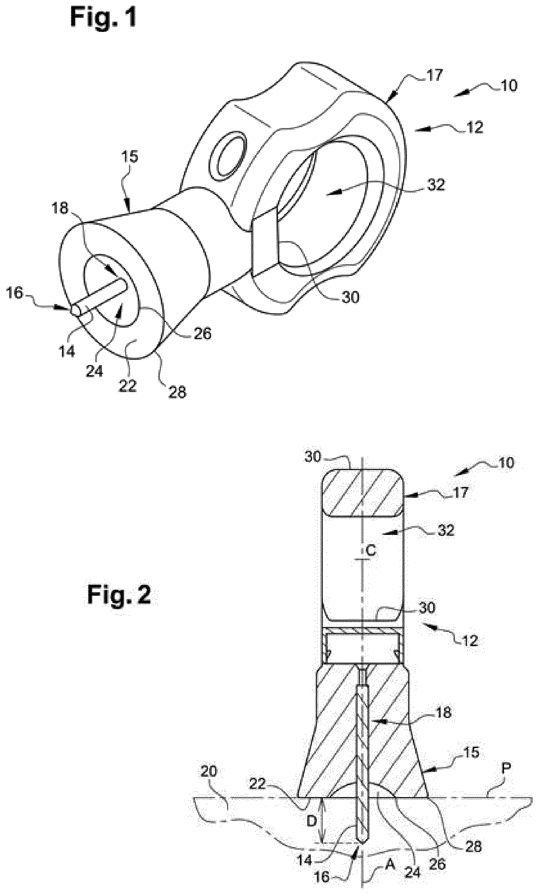

En référence aux figures 1 à 3, il est proposé un capteur de température 10 par pénétration comprenant un boîtier 12 et un aiguillon de mesure 14 porté par le boîtier 12. Le boîtier 12 forme ainsi un support de l'aiguillon de mesure 14 pour réaliser une prise de mesure. Le capteur de température 10 est de préférence configuré pour être tenu à une seule main, voire avec un seul doigt, ce qui le rend portatif. La prise de mesure est ainsi aisée et facilement répétable.

Le boîtier 12 comprend une portion de mesure 15 portant l'aiguillon de mesure 14 et une portion de préhension 17 reliée à la portion de mesure 15.

L'aiguillon de mesure 14 est configuré pour pénétrer à l'intérieur d'un corps 20 à mesurer. Pour cela, l'aiguillon de mesure 14 comprend une extrémité distale 16 en forme de pointe apte à perforer une surface. L'extrémité libre 16 est notamment configurée pour perforer des matériaux tendres ou fibreux, en particulier des tissus animaux comme du muscle, de la graisse ou de l'aponévrose. Il est également possible de faire pénétrer l'aiguillon de mesure 14 dans une chair de poisson, un fruit ou encore un légume.

L'aiguillon de mesure 14 comprend également une extrémité proximale 18 fixée au boîtier 12. En particulier, l'aiguillon de mesure 14 est fixé à la portion de mesure 15 du boîtier 12.

Le capteur de température 10 peut comprendre en outre un élément résistif (non visible) de mesure de température disposé dans l'aiguillon de mesure 14. L'aiguillon de mesure 14 est par exemple un corps creux formant une cavité interne de réception de l'élément résistif. Lorsque l'aiguillon de mesure 14 est inséré à l'intérieur du corps 20 à mesurer, la température de ce corps 20 est transmise à l'aiguillon de mesure 14 et ensuite à l'élément résistif. La variation de résistance de l'élément résistif permet de déterminer la température du corps à mesurer. En effet, la résistance de l'élément résistif varie en fonction de la température au niveau de cet élément résistif.

L'élément résistif du capteur de température 10 est une résistance de platine ou une thermistance et est disposé à l'intérieur de l'aiguillon de mesure 14. Les thermomètres utilisant un élément résistif permettent de mesurer la température d'un corps sans nécessiter une température de référence, contrairement aux thermocouples. Ce dernier type de thermomètre nécessite une température de référence pour fonctionner ce qui les rend peu adaptés au caractère portatif du capteur de température 10 utilisé en ambiance froide. L'ambiance froide de la pièce où se produit la mesure est en effet de nature à fausser la mesure de la température de référence.

L'élément résistif est relié à un organe de traitement permettant de déterminer une température en fonction de la résistance de l'élément résistif. L'organe de traitement peut également être relié à un organe d'affichage de la température. La connexion entre les organes de traitement et d'affichage peut être filaire ou sans fil.

L'organe de traitement peut être disposé à l'intérieur ou à l'extérieur du boîtier 12. Ainsi, le boîtier 12 peut contenir l'ensemble de la chaîne de mesure de la température, à savoir l'élément résistif et l'organe de traitement, ou bien être relié à un organe de traitement extérieur au boîtier 12. Une portion de l'aiguillon 14 peut être disposée à l'intérieur du boîtier 12 de sorte que l'élément résistif peut être totalement ou en partie disposé à l'intérieur du boîtier 12.

L'organe d'affichage peut être disposé à l'intérieur ou à l'extérieur du boîtier 12. Ainsi, le boîtier 12 peut comprendre une portion d'affichage permettant à un utilisateur de visualiser l'organe d'affichage ou bien être relié à un organe d'affichage extérieur au boîtier 12. La liaison entre l'organe d'affichage et l'organe de traitement peut être filaire ou bien sans fil. L'organe d'affichage peut être un ordinateur communiquant avec le capteur de mesure 10.

Les organes de traitement et d'affichage sont de préférence logés à l'intérieur de la portion de mesure 15 du boîtier 12 quand ils sont intégrés à l'intérieur du boîtier 12.

Lorsque l'organe de traitement et/ou l'organe d'affichage sont disposés à l'extérieur du boîtier 12, le capteur de température 10 peut comprendre un connecteur disposé entre les portions de préhension 17 et de mesure 15. Ce connecteur permet une liaison filaire entre les organes présents à l'intérieur du boîtier 12 et ceux disposés à l'extérieur de celui-ci.

Le boîtier 12, en particulier la portion de mesure 15, forme une surface de butée 22 destinée à être disposée au contact du corps 20 à mesurer. Ainsi, une prise de mesure de température du corps 20 comprend la pénétration du corps 20 par l'aiguillon de mesure 14 puis la mise en contact de la surface de butée 22 sur le corps 20 tel qu'illustré en figure 2.

La surface de butée 22 définit un plan de butée P. En d'autres termes, la surface de butée 22 est comprise à l'intérieur du plan de butée P de manière à former une butée plane. Le plan de butée P est un plan théorique moyen défini par la surface de butée 22. Cet agencement plan de la surface de butée 22 permet stabiliser la position et l'orientation du boîtier 12 sur le corps 20 lors d'une prise de mesure.

La surface de butée 22 peut comprendre une pluralité de reliefs, creux ou en saillie, tout en étant comprise dans ledit plan de butée P. A titre d'exemple, la surface de butée 22 peut comprendre des stries ou bien des micro-pointes. Ces reliefs peuvent permettre d'améliorer le maintien en position et en orientation du boitier 12 par rapport au corps 20.

L'aiguillon de mesure 14 est fixé au boîtier 12 de sorte qu'une portion de pénétration de l'aiguillon de mesure 14 s'étend hors du boîtier 12, en particulier hors de la surface de butée 22. En d'autres termes, l'aiguillon de mesure 14 fait saillie hors du boîtier 12, en particulier hors de la surface de butée 22.

La portion de pénétration de l'aiguillon de mesure 14 est donc définie par le plan de butée P. En effet, la portion de pénétration s'étend entre l'extrémité distale 16 de l'aiguillon de mesure 14 et la section de l'aiguillon de mesure 14 incluse dans le plan de butée P.

L'aiguillon de mesure 14 s'étend perpendiculairement au plan de butée P. Ainsi, l'aiguillon de mesure 14 s'étend le long d'un axe d'extension A perpendiculaire au plan P.

La surface de butée 22 s'étend de préférence autour de l'aiguillon de mesure 14, i.e. autour de l'axe d'extension A. Positionner l'aiguillon de mesure à l'intérieur de la surface de butée 22 permet d'améliorer encore davantage le maintien en orientation et en position du boîtier 12 par rapport au corps 20.

La surface de butée 22 est de préférence annulaire. Ainsi, une cavité d'isolation 24 est formée à l'intérieur du boîtier 12 et délimitée par la surface de butée 22. La cavité d'isolation 24 est ouverte sur l'extérieur du boîtier 12. Lorsque la surface de butée 22 est disposée contre le corps 20, la cavité d'isolation 24 est fermée par le corps 20. Cette cavité d'isolation 24 s'étend autour de l'aiguillon de mesure 14. Ainsi, la cavité d'isolation 24 permet de former autour de l'aiguillon de mesure 14 un volume d'air isolant thermiquement et électriquement l'aiguillon de mesure 14, et donc l'élément résistif. Cette isolation permet de réduire l'influence de l'écart de température entre l'air ambiant et la surface du corps 20 à mesurer et des rayonnement thermiques extérieurs.

La portion de mesure 15 forme ainsi une coupelle isolante entourant l'aiguillon de mesure 14 et l'isolant par le biais d'une paroi physique appartenant au boîtier et du volume d'air présent dans la cavité d'isolation 24.

Le boîtier 12 est réalisé de préférence dans un matériau isolant électrique et thermique de manière à renforcer cette isolant thermique et électrique. Le boîtier 12 est par exemple en matériau plastique.

La surface de butée 22 est configurée de manière à éviter l'enfoncement du boîtier 12 dans le corps 20. Ainsi, la géométrie et les dimensions de la surface de butée 12 sont configurées pour éviter l'enfoncement du boîtier 12 dans le corps 20.

La surface de butée est délimitée par un bord intérieur 26 et un bord extérieur 28. La distance séparant les bords intérieur 26 et extérieur 28 est de préférence supérieure ou égale à 5mm et inférieure ou égale 15mm. Cette plage de distance séparant les bords intérieur 26 et extérieur 28 permet à la surface de butée 22 d'être suffisamment large pour garantir une bonne stabilité du boîtier 12 sur le corps et, en même temps, de ne pas être trop large pour pouvoir s'adapter à des surfaces irrégulières. En effet, le corps 20 peut être localement irrégulier avec une surface courbe ou comprenant des reliefs. Pour obtenir une pénétration suffisante de l'aiguillon de mesure 14, il est donc préférable d'avoir une surface de butée 22 qui ne soit pas trop étendue.

Lorsque la surface de butée 22 est un anneau circulaire, les bords intérieur 26 et extérieur 28 forment respectivement un cercle intérieur et un cercle extérieur. La plage de distance mentionnée ci-dessus correspond dans ce cas à la différence de rayon entre ces cercles intérieur et extérieur.

L'aiguillon de mesure 14 et la surface de butée 22 sont de préférence configurés de sorte que la longueur de la portion de pénétration de l'aiguillon de mesure 14 est supérieure ou égale à 5mm et inférieure ou égale à 12mm. La longueur de la portion de pénétration est définie comme la distance entre l'extrémité distale 16 et l'intersection entre le plan de butée P et l'aiguillon de mesure 14. Cette distance est notée D sur la figure 2.

La portion de préhension 17 du boîtier 12 est de préférence annulaire de manière à pouvoir y insérer un doigt. En d'autres termes, le boîtier 12 forme un trou 32 ou une portion de trou dans lequel un doigt peut être inséré. Ainsi, le capteur de température 10 est bien maintenu dans la main de l'utilisateur. Il est plus aisé ainsi de contrôler la position et l'orientation du boîtier 12 lors d'une mesure.

La forme annulaire de la portion de préhension 17 peut être tronquée ou ouverte. La portion de préhension 17 peut ainsi être ouverte de sorte que le trou 32 est ouvert sur l'extérieur du boîtier 12. La portion de préhension 17 peut donc discontinue autour du trou 32.

La portion de préhension 17 du boîtier 12 est disposée à l'opposé du boîtier 12 par rapport à l'aiguillon de mesure 14.

La portion de préhension définit un centre annulaire C qui est de préférence placé sur l'axe A d'extension longitudinale de l'aiguillon de mesure 14. Cet alignement permet à l'utilisateur ayant sont doigt inséré dans la portion de préhension 17 d'appliquer un effort directement dans l'axe de l'aiguillon de mesure 14. Ceci permet un meilleur contrôle de l'effort appliqué par l'utilisateur et donc une meilleure stabilité durant la mesure.

Le centre annulaire correspond à un point médian du trou formé par la portion de préhension 17. Lorsque le trou est circulaire, le centre annulaire C est le centre du cercle.

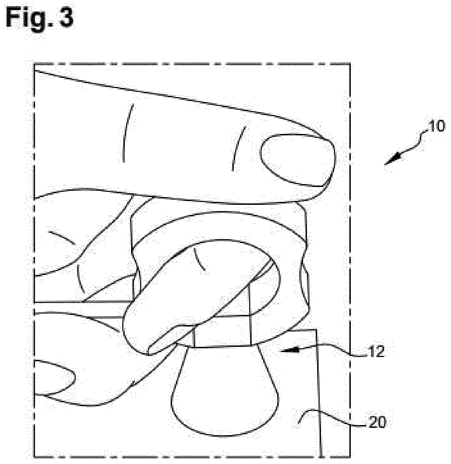

La portion de préhension 17 forme par ailleurs au moins une surface d'appui 30 s'étendant perpendiculairement à l'axe d'extension A de l'aiguillon de mesure 14. Cette surface d'appui 30 permet à l'utilisateur d'appliquer plus aisément l'effort de pénétration de l'aiguillon de mesure 14 et de plaquage du boîtier 12 sur le corps 20. Cette surface d'appui 30 peut être formée à l'intérieur du trou formé par la portion de préhension 17 et/ou sur une paroi circonférentielle du boîtier 12. De manière préférée, le boîtier comprend au moins deux surfaces d'appui 30, une première à l'intérieur du trou de la portion de préhension 17 et une deuxième sur la surface circonférentielle du boîtier 12. L'utilisateur peut ainsi respectivement apposer une surface de son doigt insérer à l'intérieur de la portion de préhension sur la première surface d'appui et son pouce sur la deuxième surface d'appui, tel qu'illustré sur la figure 3. Le contrôle de la position, de l'orientation et de l'effort appliqué par le capteur de température 10 sur le corps est facilité.

## Revendications

1. Capteur de température (10) par pénétration comprenant un boîtier (12) formant une surface de butée (22) annulaire destinée à être disposée au contact d'un corps (20) à mesurer, ladite surface de butée (22) définissant un plan de butée (P), ledit capteur comprenant également un aiguillon de mesure (14) destiné à pénétrer le corps à mesurer, ledit aiguillon (14) étant fixé au boîtier (12) de sorte qu'une portion de pénétration de l'aiguillon s'étend hors du boîtier, perpendiculairement au plan de butée, la surface de butée (22) s'étendant autour de l'aiguillon (14), characterisé en ce que le boîtier (12) forme une cavité d'isolation (24) ouverte s'étendant autour et le long de l'aiguillon de mesure, une extrémité ouverte de la cavité d'isolation étant délimitée par la surface de butée (22).

2. Capteur de température (10) selon la revendication 1, dans lequel la surface de butée (22) est délimitée par un bord intérieur (26) et un bord extérieur (28) de telle sorte que la distance séparant les bords intérieur et extérieur est supérieure ou égale à 5mm et inférieure ou égale 15mm.

3. Capteur de température (10) selon la revendication 1 ou 2, dans lequel la longueur de la portion de pénétration est supérieure ou égale à 5mm et inférieure ou égale à 12mm, la longueur de la portion de l'aiguillon (14) étant définie comme la distance (D) entre une extrémité libre (16) de l'aiguillon de mesure et l'intersection entre le plan de butée (P) et l'aiguillon de mesure (14).

4. Capteur de température (10) selon l'une quelconque des revendications précédentes, dans lequel le boîtier (12) est réalisé dans un matériau isolant électrique et thermique.

5. Capteur de température (10) selon l'une quelconque des revendications précédentes, dans lequel le boîtier (12) forme une portion annulaire de préhension disposée à l'opposé du boîtier par rapport à l'aiguillon de mesure (14), la portion annulaire définissant un centre annulaire placé sur l'axe d'extension longitudinale de l'aiguillon de mesure.

6. Capteur de température (10) selon la revendication 5, dans lequel la portion annulaire de préhension forme une surface d'appui (30) s'étendant perpendiculairement à l'axe d'extension (A) longitudinale de l'aiguillon de mesure.

7. Capteur de température (10) selon l'une quelconque des revendications précédentes, comprenant en outre un élément résistif de mesure de température disposé dans l'aiguillon de mesure (14).

## Patentansprüche

1. Eindringender Temperatursensor (10), welcher ein Gehäuse (12) umfasst, an dem eine ringförmige Anlagefläche (22) ausgebildet ist, die dazu bestimmt ist, in Kontakt mit einem zu messende Körper (20) angeordnet zu werden, wobei die Anlagefläche (22) eine Anlageebene (P) definiert, wobei der Sensor außerdem einen Messdorn (14) umfasst, der dazu bestimmt ist, in den zu messenden Körper einzudringen, wobei dieser Dorn (14) am Gehäuse (12) derart befestigt ist, dass sich ein Eindringabschnitt des Dorns außerhalb des Gehäuses erstreckt, senkrecht zur Anlageebene, wobei sich die Anlagefläche (22) um den Dorn (14) herum erstreckt, **dadurch gekennzeichnet, dass** das Gehäuse (12) einen offenen Isolationshohlraum (24) ausbildet, der sich um den Messdorn und entlang desselben erstreckt, wobei ein offenes Ende des Isolationshohlraums von der Anlagefläche (22) begrenzt wird.

2. Temperatursensor (10) nach Anspruch 1, wobei die Anlagefläche (22) von einem inneren Rand (26) und einem äußeren Rand (28) derart begrenzt wird, dass der den inneren und den äußeren Rand trennende Abstand größer oder gleich 5 mm und kleiner oder gleich 15 mm ist.

3. Temperatursensor (10) nach Anspruch 1 oder 2, wobei die Länge des Eindringabschnitts größer oder gleich 5 mm und kleiner oder gleich 12 mm ist, wobei die Länge des Abschnitts des Dorns (14) als der Abstand (D) zwischen einem freien Ende (16) des Messdorns und dem Schnitt zwischen der Anlageebene (P) und dem Messdorn (14) definiert ist.

4. Temperatursensor (10) nach einem der vorhergehenden Ansprüche, wobei das Gehäuse (12) aus einem elektrisch und thermisch isolierenden Material hergestellt ist.

5. Temperatursensor (10) nach einem der vorhergehenden Ansprüche, wobei das Gehäuse (12) einen ringförmigen Greifabschnitt ausbildet, der, bezogen auf den Messdorn (14), auf der gegenüberliegenden Seite des Gehäuses angeordnet ist, wobei der ringförmige Abschnitt eine ringförmige Mitte definiert, die auf der Längserstreckungsachse des Messdorns angeordnet ist.

6. Temperatursensor (10) nach Anspruch 5, wobei an dem ringförmigen Greifabschnitt eine Stützfläche (30) ausgebildet ist, die sich senkrecht zur Längserstreckungsachse (A) des Messdorns erstreckt.

7. Temperatursensor (10) nach einem der vorhergehenden Ansprüche, welcher außerdem ein resistives Temperaturmesselement umfasst, das in dem Messdorn (14) angeordnet ist.

## Claims

1. Penetration temperature sensor (10) comprising a housing (12) forming an annular stop surface (22) intended to be brought into contact with a body (20) to be measured, said stop surface (22) defining a stop plane (P), said sensor also comprising a measuring needle (14) intended to penetrate the body to be measured, said needle (14) being fastened to the housing (12) in such a way that a penetration portion of the needle extends out of the housing, perpendicular to the stop plane, the stop surface (22) extending about the needle (14), **characterized in that** the housing (12) forms an open insulating cavity (24) extending about and along the measuring needle, an open end of the insulating cavity being delimited by the stop surface (22).

2. Temperature sensor (10) according to Claim 1, wherein the stop surface (22) is delimited by an inner edge (26) and an outer edge (28) such that the distance between the inner and outer edges is greater than or equal to 5 mm and less than or equal to 15 mm.

3. Temperature sensor (10) according to Claim 1 or 2, wherein the length of the penetration portion is greater than or equal to 5 mm and less than or equal to 12 mm, the length of the needle portion (14) being defined as the distance (D) between a free end (16) of the measuring needle and the intersection between the stop plane (P) and the measuring needle (14).

4. Temperature sensor (10) according to any one of the preceding claims, wherein the housing (12) is made of an electrically and thermally insulating material.

5. Temperature sensor (10) according to any one of the preceding claims, wherein the housing (12) forms an annular gripping portion arranged on the opposite side of the housing with respect to the measuring needle (14), the annular portion defining an annular centre placed on the longitudinal extension axis of the measuring needle.

6. Temperature sensor (10) according to Claim 5, wherein the annular gripping portion forms a bearing surface (30) extending perpendicularly to the longitudinal extension axis (A) of the measuring needle.

7. Temperature sensor (10) according to any one of the preceding claims, further comprising a temperature-measuring resistive element arranged in the measuring needle (14).
